# FASCICULE DE BREVET EUROPEEN

(11) **EP 2 795 135 B1**
(45) Date de publication et mention de la délivrance du brevet: **25.10.2017**
(21) Numéro de dépôt: 12805675.1
(22) Date de dépôt: 17.12.2012
(51) Int. Cl.: F04D 19/00, F04D 25/06, B60H 1/00, F04D 29/32, H02K 9/02, H02K 9/06, F04D 25/08, F04D 29/58, H02K 1/20, H02K 7/14, H02K 5/20

(54) **PULSEUR AVEC DISPOSITIF DE REFROIDISSEMENT POUR APPAREIL DE CHAUFFAGE, DE VENTILATION OU DE CLIMATISATION**
GEBLÄSE MIT KÜHLUNGSVORRICHTUNG FÜR EIN HEIZUNGS-, LÜFTUNGS- ODER KLIMAANLAGENGERÄT
BLOWER WITH COOLING DEVICE FOR HEATING, VENTILATION OR AIR CONDITIONING APPARATUS

(30) Priorité: 23.12.2011 FR 1104055
(43) Date de publication de la demande: 29.10.2014
(73) Titulaire: Valeo Systemes Thermiques, 78320 Le Mesnil Saint Denis (FR)
(72) Inventeur: LE GOFF, Morgan, F-91360 Epinay sur Orge (FR); VINCENT, Philippe, F-28230 Epernon (FR); PUZENAT, Bertrand, F-78180 Montigny le Bretonneux (FR)
(74) Mandataire: Metz, Gaëlle
(86) Numéro de dépôt international: PCT/EP2012/075685
(87) Numéro de publication internationale: WO 2013/092445

(56) Documents cités:
- EP-A1- 1 809 500
- WO-A1-2011/093200
- FR-A1- 2 845 535
- FR-A1- 2 871 534
- JP-A- H11 270 493
- JP-A- S59 122 800
- US-A1- 2004 096 339

## Description

La présente invention concerne le domaine des installations de ventilation, de chauffage et/ou de climatisation de véhicules automobiles. La présente invention relève plus particulièrement du système de refroidissement du moteur et du module de commande d'un pulseur.

On entendra par pulseur, un ensemble comprenant un moteur électrique destiné à entraîner une turbine, un module de commande du moteur, un support moteur assurant le maintien du moteur et du module de commande, et un dispositif de refroidissement du moteur et du module de commande.

On entendra par bloc pulseur, un ensemble comprenant un pulseur associé à une volute.

Généralement, le flux d'air généré par le pulseur est prélevé de préférence depuis l'intérieur de la volute et acheminé vers le moteur d'entraînement afin de refroidir ce dernier. Un ou plusieurs canaux de refroidissement acheminent le flux d'air de refroidissement prélevé vers le moteur d'entraînement du pulseur, notamment au plus proche de la zone d'échauffement, généralement située à la base du moteur au niveau des balais. Les canaux de refroidissement sont couramment conformés en rampes favorisant le guidage du flux d'air de refroidissement vers la base du moteur, puis vers l'emplacement du module de commande du moteur.

Classiquement, le module de commande, qui est souvent à la périphérie du support moteur, est refroidi par un mélange d'un premier flux d'air de refroidissement provenant directement de la volute et d'un second flux d'air de refroidissement correspondant au flux d'air de refroidissement ayant déjà refroidi le moteur. Le mélange de flux vient alors au contact d'un puit de chaleur intégré au module de commande. De par le passage antérieur du second flux de refroidissement dans le logement du moteur, le mélange de flux d'air est légèrement réchauffé, engendrant alors un refroidissement du module moins efficace.

De manière connue, pour refroidir simultanément le moteur et le module de commande, il a été proposé, dans certains dispositifs de l'art antérieur, de disposer le moteur et le module de commande dans un même logement de réception, ménagé dans le support moteur, afin que ces deux éléments soient arrosés du flux d'air de refroidissement simultanément. L'inconvénient d'une telle configuration est que le moteur dégageant une chaleur plus importante que le module de commande, le flux d'air de refroidissement est rapidement réchauffé par la chaleur émise par le moteur et perd en efficacité de refroidissement sur les autres éléments à refroidir.

De plus, dans cette configuration, le flux d'air de refroidissement est seulement guidé vers le fond du logement de réception du moteur sans aucun contrôle ni de débit ni de direction par exemple.

Un autre inconvénient de cette configuration est que le flux d'air s'engouffre dans l'ensemble du logement exposant ainsi les composants électroniques du module de commande au flux d'air de refroidissement humide.

Un pulseur selon le préambule de la revendication 1 est divulgué dans le document FR2871534. L'objet de la présente invention est de permettre le refroidissement contrôlé et efficace du moteur et du module de commande d'un pulseur, sans compromettre la compacité de ce dernier.

A cet effet, la présente invention propose un pulseur d'un appareil de chauffage, de ventilation et/ou de climatisation en accord avec la revendication 1. Selon un autre aspect de l'invention, le au moins un élément de distribution du flux d'air de refroidissement est pourvu d'au moins un élément de guidage du flux d'air de refroidissement.

Selon un autre aspect de l'invention, le au moins un canal de refroidissement comprend au moins un élément de déflection du flux d'air de refroidissement.

Selon un autre aspect de l'invention, le dispositif de refroidissement comprend une entrée du flux d'air de refroidissement confondue avec l'entrée du flux d'air du canal de refroidissement.

Selon un autre aspect de l'invention, le dispositif de refroidissement comprend une bague de forme sensiblement cylindrique dans laquelle est ménagée le canal de refroidissement.

Selon un autre aspect de l'invention, le canal de refroidissement est disposé sensiblement concentriquement par rapport à la bague et à l'axe de rotation du moteur.

Selon un autre aspect de l'invention, le au moins un canal de refroidissement comprend plusieurs éléments de distribution du flux d'air de refroidissement répartis irrégulièrement le long du chemin d'écoulement.

Selon un autre aspect de l'invention, le canal de refroidissement comprend plusieurs éléments de distribution du flux d'air de refroidissement répartis à intervalles réguliers le long du chemin d'écoulement.

Selon un autre aspect de l'invention, plusieurs éléments de distribution du flux d'air de refroidissement ont une taille d'ouverture différente.

Selon un autre aspect de l'invention, plusieurs éléments de distribution du flux d'air de refroidissement ont une taille d'ouverture identique.

Selon un autre aspect de l'invention, le canal de refroidissement comprend au moins une paroi de surface interne sensiblement plane.

Selon un autre aspect de l'invention, le canal de refroidissement comprend au moins une paroi dont au moins une partie est formée par une succession de surfaces en escalier.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- La figure 1 est une vue en coupe d'un pulseur d'une installation de ventilation, chauffage et/ou de climatisation comprenant un dispositif de refroidissement selon la présente invention,
- La figure 2 est une vue en éclaté du pulseur représenté à la figure 1
- La figure 3 est une vue de dessus du dispositif de refroidissement de la présente invention selon un premier mode de réalisation de la présente invention,
- La figure 4 est une vue en perspective d'un support moteur comprenant le dispositif de refroidissement de la présente invention selon un second mode de réalisation de la présente invention, et,
- La figure 5 est une vue de dessus d'un support moteur comprenant le dispositif de refroidissement de la présente invention selon une variante du premier mode de réalisation représenté à la figure 3.

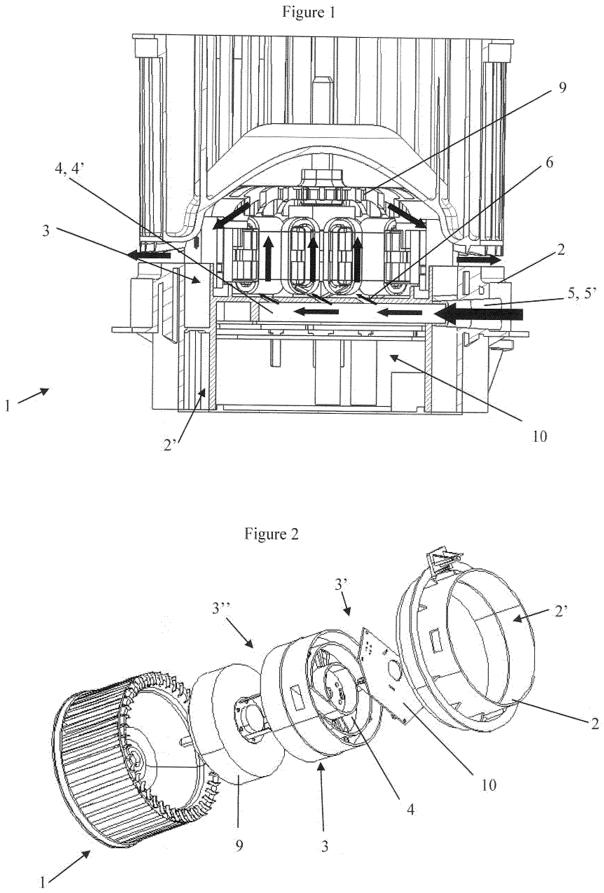

La figure 1 représente un pulseur 1 d'un appareil de chauffage, de ventilation et/ou de climatisation, comprenant au moins un moteur d'entraînement 9 d'une turbine, un module de commande 10 du moteur 9, un support moteur 2. Le pulseur 1 comprend en outre un dispositif de refroidissement 3 et tel que représenté aux figures 1 à 5. Ce dispositif de refroidissement 3 permet le refroidissement par air du moteur 9 et du module de commande 10 du moteur 9. Le moteur 9 et le module de commande 10 sont reçus dans un logement de réception 2' ménagé dans le support moteur 2. Le dispositif de refroidissement 3 est au moins partiellement disposé dans le logement de réception 2' du support moteur 2.
Préférentiellement, le dispositif de refroidissement 3 est disposé entièrement dans le logement de réception 2' du support moteur 2.

Selon la présente invention, le dispositif de refroidissement 3 est au moins partiellement disposé entre le moteur 9 et le module de commande 10 du moteur 9 de sorte que le flux d'air de refroidissement refroidit le module de commande 10 et le moteur 9 successivement et/ou simultanément. En effet, le dispositif de refroidissement 3 permet de distribuer un flux d'air de refroidissement vers le module de commande 10 puis/et vers le moteur 9. Le flux d'air de refroidissement lèche ainsi la surface du module de commande 10 avant d'atteindre l'extrémité basse du moteur 9, de sorte que le flux d'air de refroidissement est froid lorsqu'il passe sur le module de commande 10, il n'est pas réchauffé par un passage préalable vers le moteur 9, améliorant ainsi l'efficacité de refroidissement du flux d'air.
Préférentiellement, le dispositif de refroidissement 3 est disposé entre le moteur 9 et le module de commande 10 du moteur 9.

La figure 2 représente une vue en éclaté du pulseur 1 qui comprend le support moteur 2 et le logement de réception 2' destiné à recevoir au moins le moteur d'entraînement 9 et le module de commande 10 du moteur 9. Le logement de réception 2' du support moteur 2 reçoit en outre au moins partiellement le dispositif de refroidissement 3 tel que représenté aux figures 1 à 5 selon la présente invention.

Selon un aspect de la présente invention représenté à la figure 2, le moteur d'entraînement 9 et le module de commande 10 du moteur 9 peuvent être fixés sur le dispositif de refroidissement 3. Le moteur 9 peut être fixé par des moyens de fixations tels que des vis soit sur la face avant 3' soit sur la face arrière 3" du dispositif de refroidissement 3. Le module de commande 10 peut être fixé par des moyens de fixations soit sur la face avant 3' lorsque le moteur 9 est fixé sur la face arrière 3" soit sur la face arrière 3" lorsque le moteur est fixé sur la face avant 3' du dispositif de refroidissement 3. Une telle disposition permet d'isoler le module de commande 10 du moteur 9 et de faire profiter le module de commande d'un flux d'air de refroidissement plus frais et donc plus efficace dans son refroidissement que si le module de commande 10 avait été sur une même face du dispositif de refroidissement 2 que le moteur 9.

Cette disposition permet un contrôle plus efficace et une meilleure distribution du flux d'air de refroidissement lorsque le module de commande 10 et le moteur 9 sont en vis-à-vis tous deux tournées vers le canal de refroidissement 4 du dispositif de refroidissement 3.

Avantageusement et comme le montre la figure 2, le dispositif de refroidissement 3 comprend une surface de réception agencée sur ses faces avant 3' et arrière 3". La surface de réception permettant d'accueillir le moteur 9 sur une des faces 3' et le module de commande 10 sur l'autre des faces 3". La surface de réception comprend des orifices permettant le passage de connecteurs du moteur vers le module de commande. Il peut être prévu également, des moyens de fixation à la périphérie du canal de refroidissement 4 permettant la fixation du moyen de commande 10.

Selon l'invention, le support moteur 2 tel que représenté aux figures 1, 2, 4, 5 est réalisé d'un seul tenant avec le au moins un dispositif de refroidissement 3, ce qui permet notamment une réduction des coûts de fabrication.

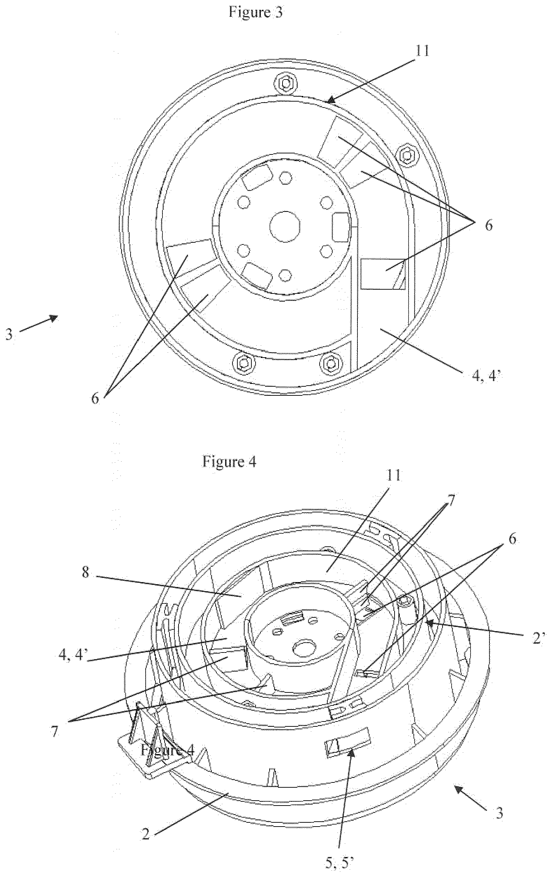

Comme représenté aux figures 1 à 5 et plus particulièrement aux figures 3 à 5, la présente invention concerne un dispositif de refroidissement 3 par air du pulseur 1 pour appareil de chauffage, de ventilation et/ou de climatisation, comprenant au moins un canal de refroidissement 4 comprenant au moins une entrée d'air de refroidissement 5 et définissant un chemin d'écoulement 4' d'un flux d'air de refroidissement destiné à être parcouru au moins partiellement par le flux d'air de refroidissement, le canal 4 étant délimité par au moins une paroi 11. Le canal de refroidissement 4 comprend au moins un élément de distribution 6 du flux d'air de refroidissement agencé sur le chemin d'écoulement 4' du canal 4. L'élément de distribution 6 du flux d'air de refroidissement est un élément qui permet de contrôler le refroidissement du moteur 9 et du module de commande 10 en distribuant le flux d'air de refroidissement depuis le chemin d'écoulement 4' vers les composants desdits moteur 9 et module de commande 10 ayant besoin d'être refroidis.

Selon la présente invention et comme représenté notamment à la figure 3, le canal de refroidissement 4 est délimité par au moins une paroi 11 dans laquelle est ménagé au moins un élément de distribution 6 du flux d'air de refroidissement, ledit au moins un élément de distribution 6 étant une ouverture 6 traversant ladite paroi 11 du canal 4. Cet aspect a pour avantage de permettre au flux d'air, en passant à travers l'ouverture 6, de refroidir le moteur 9 et le module de commande 10, lesquels sont agencés chacun d'un côté de la paroi 11 respectivement sur les faces avant 3' et arrière 3" ou inversement comme le montrent les figures 1 et 2.

Selon un aspect de la présente invention et un premier mode de réalisation du dispositif de refroidissement 3 représenté à la figure 3, le dispositif de refroidissement comprend plusieurs éléments de distribution 6 du flux d'air de refroidissement agencés sur le chemin d'écoulement 4' du canal 4.

Avantageusement ces éléments de distribution 6 sont assimilés à des sorties de flux d'air de refroidissement. Les éléments de distribution 6 du flux d'air de refroidissement selon la présente invention sont agencés sur le chemin d'écoulement 4' du canal 4, de sorte que le flux d'air de refroidissement est distribué vers le moteur 9 et le module de commande 10 pour les refroidir sensiblement en même temps.

Préférentiellement, les ouvertures des éléments de distribution 6 du flux d'air de refroidissement sont inscrites dans un même plan sensiblement perpendiculaire à l'axe du moteur.

La figure 4 représente un second mode de réalisation d'un dispositif de refroidissement 3 selon la présente invention, dans lequel l'élément de distribution 6 du flux d'air de refroidissement est pourvu d'au moins un élément de guidage 7 du flux d'air de refroidissement. Cet élément de guidage 7 est agencé dans un plan sensiblement perpendiculaire au plan dans lequel les ouvertures 6 sont inscrites.

Selon une variante non représentée, l'élément de guidage 7 est incliné de sorte que l'angle qu'il forme avec le plan dans lequel les ouvertures 6 sont inscrites un angle différent de 0°.

Les ouvertures de l'élément de distribution 6 du flux d'air de refroidissement sont délimitées par au moins un bord près duquel, au moins élément de guidage 7 peut être avantageusement disposé.

Selon un aspect de la présente invention, l'élément de guidage 7 peut être une rampe ou une pente permettant de guider le flux d'air de refroidissement vers l'élément de distribution du flux d'air.

Selon un autre aspect de la présente invention cet élément de guidage peut être disposé soit sur la face avant 3' du dispositif de refroidissement 3 et/ou sur la face arrière 3". L'élément de guidage 7 du flux d'air de refroidissement peut dépasser de part et d'autre de l'ouverture 6 de sorte que ces extrémités soient saillantes de part et d'autre de la paroi 11 du canal de refroidissement 4.

Préférentiellement, chaque élément de guidage 7 de flux de refroidissement présente une inclinaison adaptée en fonction du flux d'air de refroidissement à transmettre aux composants à refroidir. En effet, si un composant du module de commande 10 ou du moteur 9 génère un fort échauffement et a besoin d'un refroidissement supérieur à d'autres composants, on peut grâce à ces éléments de guidage 7 de flux d'air de refroidissement, guider plus efficacement le flux d'air de refroidissement vers ledit composant en lui octroyant une priorité générée par l'élément de guidage 7 en fonction de son inclinaison par exemple. On peut générer également une priorité en fonction de paramètres propre à l'élément de guidage 7 tel que sa hauteur ou sa disposition par rapport à l'élément de distribution 6 par exemple.

Alternativement, chaque élément de guidage 7 de flux de refroidissement présente une inclinaison identique.

Selon un aspect de la présente invention, l'élément de guidage 7 du flux d'air de refroidissement a également pour fonction d'obturer au moins partiellement l'accès à certains éléments de distribution 6 du flux d'air de refroidissement de sorte qu'une régulation du débit de flux d'air de refroidissement s'opère au niveau des ouvertures 6 des éléments de distribution 6.

Selon un aspect de la présente invention, le canal de refroidissement 4 comprend au moins un élément de déflection 8 du flux d'air de refroidissement. L'élément de déflection 8 du flux d'air de refroidissement est ménagé dans le canal de refroidissement 4, de sorte à modifier la direction de flux de refroidissement sur chemin de refroidissement 4' ce qui a pour avantage d'accélérer sensiblement la vitesse du flux d'air de refroidissement et de diriger ce dernier vers les éléments de guidage 7 et/ou les éléments de distribution 6 de flux d'air de refroidissement.

Selon un aspect de la présente invention illustré aux figures 1 à 5, le dispositif de refroidissement 3 comprend une bague de forme sensiblement cylindrique dans laquelle est ménagée le canal de refroidissement 4.

Selon un autre aspect de la présente invention, le ou les éléments de guidage 7 de flux de refroidissement peuvent être formés d'un seul tenant avec le dispositif de refroidissement 3. Il en va de même pour le ou les éléments de déflection 8 du flux de refroidissement, qui peuvent être également réalisés d'un seul tenant avec le dispositif de refroidissement 3. Avantageusement la bague est de forme sensiblement cylindrique ce qui permet l'adaptation du dispositif de refroidissement 3 à un support moteur classique qui comprend généralement le logement de réception de forme sensiblement cylindrique et qui de ce fait peut recevoir correctement le dispositif de refroidissement 3 selon la présente invention.

Le canal de refroidissement 4 peut donc grâce à cette configuration et selon la présente invention être disposé sensiblement concentriquement par rapport à la bague et à l'axe de rotation du moteur. Il peut se présenter sous la forme d'une spirale à une ou plusieurs spires autrement dit à un ou plusieurs canaux 4.

Par ailleurs, le canal de refroidissement 4 comprend une entrée du flux de refroidissement 5' confondue avec l'entrée 5 du flux d'air du dispositif de refroidissement 3 comme le montrent les figures 1, 4 et 5. Le canal de refroidissement 4 comprend en outre une extrémité qui peut être fermée ou dans laquelle est ménagé un élément de distribution 6 de flux d'air de refroidissement.

Selon un aspect de la présente invention représenté aux figures 3 à 5, le canal de refroidissement comprend plusieurs éléments de distribution 6 du flux d'air de refroidissement répartis irrégulièrement le long du chemin d'écoulement 4'. Alternativement, le canal de refroidissement 4 comprend plusieurs éléments de distribution 6 du flux d'air de refroidissement répartis à intervalles réguliers le long du chemin d'écoulement 4'. La répartition des éléments de distribution 6 du flux d'air de refroidissement peut être fonction de la répartition des composants à refroidir qu'ils appartiennent au moteur 9 ou au module de commande 10.

Selon un aspect de la présente invention représenté également aux figures 3 à 5, le canal de refroidissement 4 comprend plusieurs éléments de distribution 6 du flux d'air de refroidissement qui ont une taille d'ouverture 6 différente. Alternativement, le canal de refroidissement 4 comprend plusieurs éléments de distribution 6 du flux d'air de refroidissement qui ont une taille d'ouverture 6 identique. La taille de l'ouverture 6 des éléments de distribution 6 peut être adaptée en fonction de l'échauffement des composants que lesdits éléments de distribution 6 desservent, de sorte qu'un composant s'échauffant beaucoup sera arrosé d'un flux d'air de refroidissement distribué par une plus grande ouverture 6.

Avantageusement, l'ouverture 6 de chaque élément de distribution 6 du flux d'air de refroidissement occupe toute la largeur du canal de refroidissement 4.

Alternativement, l'ouverture 6 occupe en partie la largeur du canal de refroidissement 4.

Selon un aspect de la présente invention, le canal de refroidissement comprend au moins une paroi de surface interne sensiblement plane. La paroi 11 du canal de refroidissement 4 est sensiblement de forme en U. La paroi 11 délimite ledit canal de refroidissement 4. La surface interne de cette paroi 11 est la surface en contact avec le flux d'air de refroidissement. Préférentiellement la paroi 11 est de surface plane. Avantageusement, la paroi 11 comprend au moins une surface de fond qui peut être plane.

Selon une variante d'un aspect de la présente invention non représentée, le canal de refroidissement comprend au moins une paroi dont au moins une partie est formée par une succession de surfaces en escalier. Avantageusement, la paroi 11 comprend au moins une surface de fond qui peut être formée par une succession de surfaces en escalier, les surfaces étant reliées entre elles pas des contremarches dans lesquelles au moins un élément de distribution 6 de flux d'air de refroidissement est agencé.

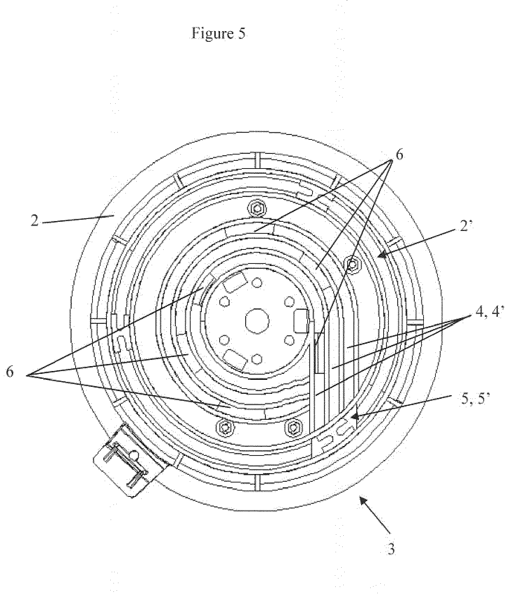

La figure 5 représente une variante du premier mode de réalisation représenté à la figure 3, dans lequel le dispositif de refroidissement 3 comprend une pluralité de canaux de refroidissement 4 ou spires dans lesquelles sont agencés une pluralité d'éléments de distribution 6 de flux d'air de refroidissement.
Un des avantages de ce dispositif de refroidissement 3 est le fait que le refroidissement du moteur 9 et du module de commande 10 s'opère tout en conservant la compacité de l'ensemble pulseur car le dispositif de refroidissement 3 est reçu directement dans le logement de réception 2' du support moteur 2. Par ailleurs, selon un aspect de l'invention le moteur 9 peut être de type sans balais de sorte que la compacité de l'ensemble est améliorée.

Bien évidemment, la présente invention n'est pas limitée aux modes de réalisation décrits précédemment et fournis uniquement à titre d'exemple. Elle englobe diverses modifications, formes alternatives et autres variantes que pourra envisager l'homme du métier dans le cadre des revendications.

## Revendications

1. Pulseur (1) d'un appareil de chauffage, de ventilation et/ou de climatisation, comprenant au moins:
- un moteur (9) destiné à entraîner une turbine ;
- un module de commande (10) du moteur (9) ;
- un support moteur (2) qui comprend un logement de réception (2') destiné à recevoir au moins ledit moteur (9) et ledit module de commande (10) du moteur (9) ;
ledit logement de réception (2') du support moteur (2) reçoit en outre au moins partiellement un dispositif de refroidissement (3) qui comprend au moins un canal de refroidissement (4) comprenant au moins une entrée d'air de refroidissement (5) et définissant un chemin d'écoulement (4') d'un flux d'air de refroidissement destiné à être parcouru au moins partiellement par le flux d'air de refroidissement, le canal de refroidissement (4) comprenant au moins un élément de distribution (6) du flux d'air de refroidissement agencé sur le chemin d'écoulement (4') du canal (4),
le dispositif de refroidissement (3) étant disposé au moins partiellement entre le moteur d'entraînement (9) et le module de commande (10),
et le canal de refroidissement (4) étant délimité par au moins une paroi (11) dans laquelle est ménagé au moins un élément de distribution (6) du flux d'air de refroidissement, ledit au moins un élément de distribution (6) étant une ouverture (6),
**caractérisé en ce que** le support moteur (2) est réalisé d'un seul tenant.

2. Pulseur selon l'une quelconque des revendications 1, **caractérisé en ce que** ledit au moins un élément de distribution (6) du flux d'air de refroidissement est pourvu d'au moins un élément de guidage (7) du flux d'air de refroidissement.

3. Pulseur selon la revendication 1 ou 2, **caractérisé en ce que** ledit au moins un canal de refroidissement (4) comprend au moins un élément de déflection (8) du flux d'air de refroidissement.

4. Pulseur selon l'une quelconque des revendications 1 à 3, **caractérisé en ce que** le dispositif de refroidissement comprend l'entrée (5) du flux d'air de refroidissement du dispositif de refroidissement (3) qui est au moins partiellement confondue avec l'entrée (5') du flux d'air du canal de refroidissement (4).

5. Pulseur selon l'une quelconque des revendications 1 à 4, **caractérisé en ce que** ledit dispositif de refroidissement (3) comprend une bague de forme sensiblement cylindrique dans laquelle est ménagé le canal de refroidissement (4).

6. Pulseur selon la revendication 5, **caractérisé en ce que** le canal de refroidissement (4) est disposé sensiblement concentriquement par rapport à la bague et à l'axe de rotation du moteur (9).

7. Pulseur selon l'une quelconque des revendications 1 à 6, **caractérisé en ce que** le au moins un canal de refroidissement (4) comprend plusieurs éléments de distribution (6) du flux d'air de refroidissement répartis irrégulièrement le long du chemin d'écoulement (4').

8. Pulseur selon l'une quelconque des revendications 1 à 6, **caractérisé en ce que** le canal de refroidissement (4) comprend plusieurs éléments de distribution (6) du flux d'air de refroidissement répartis à intervalles réguliers le long du chemin d'écoulement (4').

9. Pulseur selon l'une quelconque des revendications 1 à 8, **caractérisé en ce que** plusieurs éléments de distribution (6) du flux d'air de refroidissement ont une taille d'ouverture différente ou identique.

10. Pulseur selon l'une quelconque des revendications 1 à 9, **caractérisé en ce que** le canal de refroidissement (4) comprend au moins une paroi (11) de surface interne sensiblement plane.

11. Pulseur selon l'une quelconque des revendications 1 à 9, **caractérisé en ce que** le canal de refroidissement (4) comprend au moins une paroi (11) dont au moins une partie est formée par une succession de surfaces en escalier.

## Patentansprüche

1. Gebläse (1) eines Heizungs-, Lüftungs- und/oder Klimatisierungsgeräts, das mindestens enthält:
- einen Motor (9), der dazu bestimmt ist, eine Turbine anzutreiben;
- ein Steuermodul (10) des Motors (9);
- einen Motorträger (2), der einen Aufnahmesitz (2') enthält, der dazu bestimmt ist, mindestens den Motor (9) und das Steuermodul (10) des Motors (9) aufzunehmen;
wobei der Aufnahmesitz (2') des Motorträgers (2) außerdem mindestens teilweise eine Kühlvorrichtung (3) aufnimmt, die mindestens einen Kühlkanal (4) enthält, der mindestens einen Kühllufteingang (5) enthält und einen Strömungspfad (4') eines Kühlluftstroms definiert, der dazu bestimmt ist, zumindest teilweise vom Kühlluftstrom durchflossen zu werden,
wobei der Kühlkanal (4) mindestens ein Ausgabeelement (6) des Kühlluftstroms enthält, das auf dem Strömungspfad (4') des Kanals (4) angeordnet ist,
wobei die Kühlvorrichtung (3) zumindest teilweise zwischen dem Antriebsmotor (9) und dem Steuermodul (10) angeordnet ist,
und der Kühlkanal (4) von mindestens einer Wand (11) begrenzt wird, in der mindestens ein Ausgabeelement (6) des Kühlluftstroms ausgespart ist, wobei das mindestens eine Ausgabeelement (6) eine Öffnung (6) ist,
**dadurch gekennzeichnet, dass** der Motorträger (2) aus einem Stück hergestellt ist.

2. Gebläse nach einem der Ansprüche 1, **dadurch gekennzeichnet, dass** das mindestens eine Ausgabeelement (6) des Kühlluftstroms mit mindestens einem Leitelement (7) des Kühlluftstroms versehen ist.

3. Gebläse nach Anspruch 1 oder 2, **dadurch gekennzeichnet, dass** der mindestens eine Kühlkanal (4) mindestens ein Ablenkelement (8) des Kühlluftstroms enthält.

4. Gebläse nach einem der Ansprüche 1 bis 3, **dadurch gekennzeichnet, dass** die Kühlvorrichtung den Eingang (5) des Kühlluftstroms der Kühlvorrichtung (3) enthält, der zumindest teilweise mit dem Eingang (5') des Luftstroms des Kühlkanals (4) zusammenfällt.

5. Gebläse nach einem der Ansprüche 1 bis 4, **dadurch gekennzeichnet, dass** die Kühlvorrichtung (3) einen Ring von im Wesentlichen zylindrischer Form enthält, in dem der Kühlkanal (4) ausgespart ist.

6. Gebläse nach Anspruch 5, **dadurch gekennzeichnet, dass** der Kühlkanal (4) im Wesentlichen konzentrisch bezüglich des Rings und der Drehachse des Motors (9) angeordnet ist.

7. Gebläse nach einem der Ansprüche 1 bis 6, **dadurch gekennzeichnet, dass** der mindestens eine Kühlkanal (4) mehrere Ausgabeelemente (6) des Kühlluftstroms enthält, die ungleichmäßig entlang des Strömungspfads (4') verteilt sind.

8. Gebläse nach einem der Ansprüche 1 bis 6, **dadurch gekennzeichnet, dass** der Kühlkanal (4) mehrere Ausgabeelemente (6) des Kühlluftstroms enthält, die in gleichmäßigen Abständen entlang des Strömungspfads (4') verteilt sind.

9. Gebläse nach einem der Ansprüche 1 bis 8, **dadurch gekennzeichnet, dass** mehrere Ausgabeelemente (6) des Kühlluftstroms eine unterschiedliche oder gleiche Öffnungsgröße haben.

10. Gebläse nach einem der Ansprüche 1 bis 9, **dadurch gekennzeichnet, dass** der Kühlkanal (4) mindestens eine Wand (11) mit im Wesentlichen ebener Innenfläche enthält.

11. Gebläse nach einem der Ansprüche 1 bis 9, **dadurch gekennzeichnet, dass** der Kühlkanal (4) mindestens eine Wand (11) enthält, von der mindestens ein Teil durch eine Folge von treppenförmig angeordneten Flächen gebildet wird.

## Claims

1. Blower (1) of a heating, ventilation and/or air-conditioning apparatus comprising at least:
- a motor (9) intended to drive a turbine;
- a control module (10) of the motor (9);
- a motor support (2) which comprises a reception housing (2') intended to receive at least said motor (9) and said control module (10) of the motor (9);
said reception housing (2') of the motor support (2) also receives, at least partially, a cooling device (3) which comprises at least one cooling duct (4) comprising at least one cooling air inlet (5) and defining a flow path (4') for a cooling air flow intended to be passed through at least partially by the cooling air flow,
the cooling duct (4) comprising at least one cooling air flow distribution element (6) arranged on the flow path (4') of the duct (4),
the cooling device (3) being disposed at least partially between the driving motor (9) and the control module (10),
and the cooling duct (4) being delimited by at least one wall (11) in which is formed at least one cooling air flow distribution element (6), said at least one distribution element (6) being an opening (6),
**characterized in that** the motor support (2) is produced in a single piece.

2. Blower according to any one of Claims 1, **characterized in that** said at least one cooling air flow distribution element (6) is provided with at least one cooling air flow guiding element (7).

3. Blower according to Claim 1 or 2, **characterized in that** said at least one cooling duct (4) comprises at least one cooling air flow deflection element (8).

4. Blower according to any one of Claims 1 to 3, **characterized in that** the cooling device comprises the cooling air flow inlet (5) of the cooling device (3) which at least partially coincides with the air flow inlet (5') of the cooling duct (4).

5. Blower according to any one of Claims 1 to 4, **characterized in that** said cooling device (3) comprises a ring of substantially cylindrical form in which the cooling duct (4) is formed.

6. Blower according to Claim 5, **characterized in that** the cooling duct (4) is disposed substantially concentrically in relation to the ring and to the axis of rotation of the motor (9).

7. Blower according to any one of Claims 1 to 6, **characterized in that** the at least one cooling duct (4) comprises several cooling air flow distribution elements (6) distributed irregularly along the flow path (4').

8. Blower according to any one of Claims 1 to 6, **characterized in that** the cooling duct (4) comprises several cooling air flow distribution elements (6) distributed at regular intervals along the flow path (4').

9. Blower according to any one of Claims 1 to 8, **characterized in that** several cooling air flow distribution elements (6) have a different or identical opening size.

10. Blower according to any one of Claims 1 to 9, **characterized in that** the cooling duct (4) comprises at least one wall (11) of substantially planar internal surface.

11. Blower according to any one of Claims 1 to 9, **characterized in that** the cooling duct (4) comprises at least one wall (11) of which at least a part is formed by a succession of surfaces in staircase.
